# EUROPÄISCHE PATENTSCHRIFT

(11) **EP 2 337 716 B1**
(45) Veröffentlichungstag und Bekanntmachung des Hinweises auf die Patenterteilung: **30.05.2012**
(21) Anmeldenummer: 09782967.5
(22) Anmeldetag: 14.09.2009
(51) Int. Cl.: B60T 8/36, F16K 31/06

(54) **MAGNETVENTIL**
SOLENOID VALVE
ÉLECTROVANNE

(30) Priorität: 10.10.2008 DE 102008042731
(43) Veröffentlichungstag der Anmeldung: 29.06.2011
(73) Patentinhaber: Robert Bosch GmbH, 70442 Stuttgart (DE)
(72) Erfinder: AMBROSI, Massimiliano, 71672 Marbach (DE); HOUIS, Nicolas, 74321 Bietigheim-Bissingen (DE); SCHUSTER, Gerhard, 71691 Freiberg (DE); HUBER, Siegfried, 74072 Heilbronn (DE); STOKMAIER, Gerhard, 71706 Markgroeningen (DE); BUCHENAU, Ingo, 71711 Steinheim (DE); HILDEN, Michael, 74182 Obersulm-Eschenau (DE)
(86) Internationale Anmeldenummer: PCT/EP2009/061868
(87) Internationale Veröffentlichungsnummer: WO 2010/040620

(56) Entgegenhaltungen:
- EP-A- 0 418 502
- DE-A1- 4 445 221
- DE-A1- 10 208 996
- DE-A1-102007 053 134

## Beschreibung

### Stand der Technik

Die Erfindung betrifft ein Magnetventil, insbesondere zur Steuerung des Bremsdrucks einer Radbremse einer schlupfregelbaren Hydraulikbremsanlage eines Kraftfahrzeugs gemäß den gattungsbildenden Merkmalen des Anspruchs 1. Derartige Magnetventile sind beispielsweise aus der älteren Offenlegungsschrift der Anmelderin mit der Veröffentlichungsnummer DE 10 2007 053 134 A1 bereits bekannt

Unter schlupfregelbaren Hydraulikbremsanlagen von Kraftfahrzeugen werden im Folgenden sowohl Antiblockierschutz- (ABS-), Antriebsschlupf- (ASR-) oder Fahrdynamik- (ESP-) Regelsysteme verstanden. Bei diesen Regelsystemen ist der Bremsdruck wenigstens einer Radbremse z.B. in Abhängigkeit der am jeweiligen Rad vorherrschenden Schlupfverhältnisse durch Magnetventile steuer- bzw. regelbar. Eine Ansteuerung dieser Magnetventile erfolgt durch ein elektronisches Steuergerät, das hierfür Sensorsignale auswertet.

Bei den in diesen Regelsystemen eingesetzten Magnetventilen sind zwei prinzipielle Bauarten bekannt: Es werden entweder Magnetventile eingesetzt, die als Schaltventile ausgebildet sind und sich in zwei diskrete Stellungen (Grundstellung und Schaltstellung) umschalten lassen oder es handelt sich um Stetigventile (= Proportionalventile), die zwischen einer Offenstellung und einer Schließstellung beliebige Zwischenstellungen einnehmen können. Die Erfindung ist auf Schaltventile und auf Stetigventile gleichermaßen anwendbar.

Die in der DE 10 2007 053 134 A1 beschriebenen Magnetventile weisen als wesentliche Bauteile unter anderem einen Ventileinsatz auf, an dem jeweils wenigstens ein Zulauf und ein Ablauf ausgebildet ist. Der Ventileinsatz ist aus Kostengründen durch Einrollen eines Blechstreifens hergestellt, wobei die beiden Enden dieses Blechstreifens dabei annähernd spaltfrei aneinander anliegen. Grund hierfür ist, dass ein eventuell bestehender Spalt ein unerwünschtes Hindernis innerhalb des Magnetkreises des Magnetventils darstellen würde und deshalb zu vermeiden ist.

Zur Steuerung einer hydraulischen Verbindung zwischen dem Zu- und Ablauf ist ein Ventilkörper vorhanden, welcher einen Steuerquerschnitt ausbildet. Der Steuerquerschnitt ist beim zitierten Stand der Technik als Ventilsitz ausgeführt. Letzterer ist mittels eines Stößels steuerbar, der dazu im Ventileinsatz verschiebbar aufgenommen ist. Eine Betätigung des Stößels erfolgt mittelbar durch einen Anker, der in einem Ankerraum beweglich angeordnet ist. Der Ankerraum wird von einer einseitig geschlossenen und am Ventileinsatz festgelegten Kapsel begrenzt

Ein mit Kapsel, Anker, Stößel und Ventilkörper bestückter Ventileinsatz bildet eine sogenannte Ventilpatrone. Auf diese Ventilpatrone wird eine ringförmig ausgebildete elektronisch ansteuerbare Spule aufgesteckt. Mit einer Ansteuerung dieser Spule wird der Anker mit in Schließrichtung des Magnetventils wirkenden Magnetkräften beaufschlagt. Diesen Schließkräften wirken hydraulische Kräfte und mechanische Federkräfte, welche den Anker in Richtung einer Grundstellung belasten, öffnend entgegen. Sobald die Magnetkräfte höher als diese öffnenden Kräfte sind, führt der Anker einen Arbeitshub aus. Die Ankerbewegung wird auf den Stößel übertragen, der dadurch den Ventilsitz schließt. Mit einer Rücknahme der elektrischen Ansteuerung der Spule wird der Stößel durch die Federkraft zurück gestellt und das Magnetventil nimmt wieder seine Offen- bzw. Durchlassstellung ein.

Unter Betriebsbedingungen ist das Innere eines derart aufgebauten Magnetventils vollständig mit zu steuerndem Druckmittel gefüllt. In diesem Druckmittel kann allerdings Gas (Luft) gelöst sein. Dieses Gas kann unter bestimmten Betriebsbedingungen aus dem Druckmittel ausgasen und Gasblasen bilden. Diese sammeln sich vorzugsweise im Ankerraum an. Insbesondere bei Stetigventilen können Gasblasen Schwingungen des Stößels auslösen, die als Geräusche wahrnehmbar sind und die das Betriebsverhalten des Magnetventils nachteilig verändern. Zwar besteht bei den bekannten Magnetventilen zwischen dem Ankerraum und dem Ablauf eine erste hydraulisch wirksame Verbindung über die Führung des Stößels im Ventileinsatz, jedoch endet diese Verbindung sacklochartig, so dass sich keine Druckströmung des Ankerraums einstellen kann.

Folglich besteht bei Magnetventilen nach dem Stand der Technik das Risiko, dass sich Gasblasen, die sich einmal im Ankerraum angesammelt haben, nur schwer wieder aus der Ventilpatrone des Magnetventils entfernen lassen.

Dokument DE 10 208 996 A1 offenbart ein Magnetventil gemäβ dem Oberbegriff vom Anspruch 1.

### Vorteile der Erfindung

Im Unterschied dazu weist ein Magnetventil gemäß den Merkmalen des Anspruchs 1 den Vorteil auf, dass anhand möglichst einfach umsetzbarer konstruktiver Maßnahmen die Durchströmbarkeit des Ankerraums und dadurch die Entfernung eventuell vorhandener Gasblasen verbessert ist. Erfindungsgemäß wird vorgeschlagen, hierfür wenigstens eine von der ersten hydraulisch wirksamen Verbindung abgekoppelte zweite hydraulisch wirksame Verbindung des Ankerraums mit dem Ablauf vorzusehen und diese abseits des Führungsbereichs für den Stößel im Ventileinsatz anzuordnen. Diese zweite hydraulisch wirksame Verbindung erzeugt zusammen mit der erläuterten ersten, an der Führung des Stößels im Ventileinsatz gebildeten hydraulischen Verbindung einen geschlossenen Strömungspfad, der vom Zulauf durch den Ventilkörper über die Führung des Stößels in den Ankerraum und vom Ankerraum auf direktem Weg zurück zum Ablauf verläuft. Sie stellt damit eine Durchströmung des Ankerraums sicher, wodurch sich eventuell vorhandene Gasblasen relativ leicht ausspülen lassen. Die erwähnten nachteiligen Effekte, wie beispielsweise Betriebsgeräusche oder ein geändertes Betriebsverhalten des Magnetventils, lassen sich dadurch zumindest weitgehend vermieden. Die wenigstens eine zweite hydraulisch wirksame Verbindung ist zwischen dem Auβenumfang des Ventileinsatzes und dem Innenumfang der Kapsel ausgebildet.

Die vorgeschlagene zweite hydraulisch wirksame Verbindung lässt sich konstruktiv relativ einfach und damit kostengünstig realisieren anhand wenigstens einer nach außen offenen Längsnut, die sich über einen Teil der Axiallänge des Ventileinsatzes entlang von dessen Außenumfang erstreckt.

Diese Längsnut kann hinsichtlich ihrer Querschnittsform (Kreissegment-, Dreiecks-, Rechteck- oder Mehreckquerschnitt) und/oder ihrer Tiefe in weiten Bereichen konstruktiv variiert werden und lässt sich daher ventil- und funktionsabhängig ausgestalten.

Weitere Vorteile oder vorteilhafte Weiterbildungen der Erfindung ergeben sich aus den Unteransprüchen und der nachfolgenden Beschreibung.

### Zeichnung

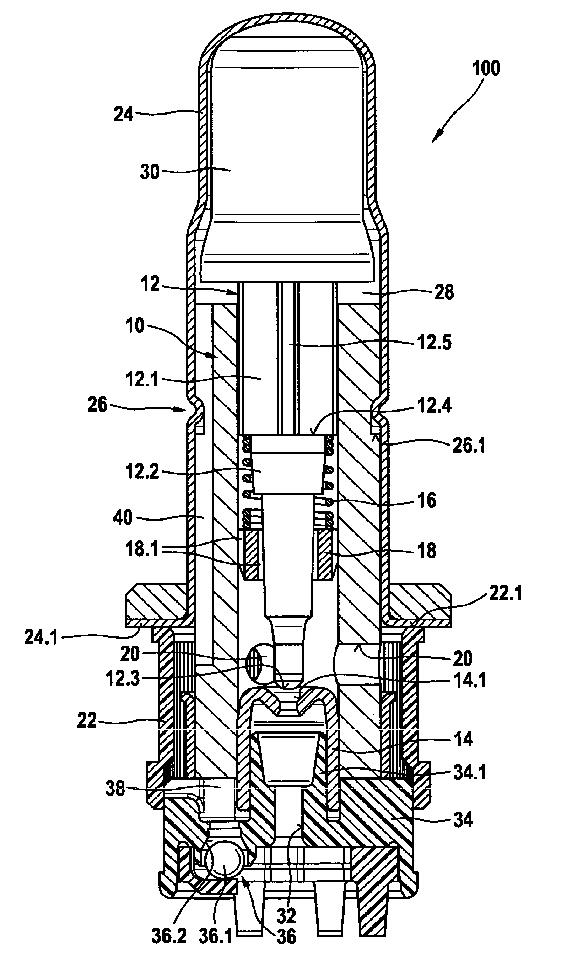

Ein Ausführungsbeispiel der Erfindung ist in der Zeichnung dargestellt und wird in der nachfolgenden Beschreibung detailliert erläutert. Wie einführend bereits ausgeführt, umfasst ein erfindungsgemäßes Magnetventil eine Ventilpatrone und eine auf diese Ventilpatrone aufsteckbare ringförmige Spule. Die Erfindung ist an der Ventilpatrone ausgebildet, welche in der einzigen Figur im Längsschnitt dargestellt ist.

### Beschreibung des Ausführungsbeispiels

Die in der Figur gezeigte Ventilpatrone 100 weist als eines ihrer zentralen Bauteile einen Ventileinsatz 10 auf. Dabei handelt es sich um einen hohlzylindrisches Bauteil, das aus magnetisch leitendem Material hergestellt ist, beispielsweise durch spanende Bearbeitung eines massiven Materialblocks oder durch Einrollen einer Blechplatine. Im Inneren des Ventileinsatzes 10 ist ein Stößel 12 axial beweglich geführt. Hierfür weist der Stößel 12 an einem seiner Enden einen ersten Führungsabschnitt 12.1 auf, dessen Außenabmessungen auf den Innendurchmesser des Ventileinsatzes 10 abgestimmt ist. Der Führungsabschnitt 12.1 steht teilweise gegenüber dem stirnseitigen Ende des Ventileinsatzes 10 vor. An den Führungsabschnitt 12.1 schließt sich in Richtung in das Innere des Ventileinsatzes 10 hinein ein Schließkörperabschnitt 12.2 an. Letzterer erstreckt sich fingerförmig bis zu dem, dem Führungsabschnitt 12.1 gegenüberliegenden Ende des Stößels 12. Er ist dabei mehrfach in seinem Außendurchmesser zurück genommen und endet in einem Kugelsegment 12.3. Dieses Kugelsegment 12.3 liegt innerhalb des Ventileinsatzes 12 und steuert einen Ventilsitz 14.1.

Ein Ventilkörper 14 bildet den Ventilsitz 14.1 aus. Dieser Ventilkörper 14 ist tassenförmig gestaltet und in das offene Ende des Ventileinsatzes 10 zumindest abschnittsweise eingepresst. In der dargestellten Grundstellung der Ventilpatrone 100 ist das Kugelsegment 12.3 des Stößels 12 vom Ventilsitz 14.1 abgehoben. Dies wird durch ein Rückstellelement in Form einer Feder 16 bewirkt. Die Feder 16 greift am Stößel 12 an einem als rechtwinklige Schulter 12.4 ausgeführten Übergang vom Führungsabschnitt 12.1 zum Schließkörperabschnitt 12.2 an und stützt sich gegenüberliegend dazu an einem, ebenfalls im Inneren des Ventileinsatzes 10 festgelegten Stützring 18 ab. Die Position dieses Stützrings 18 innerhalb des Ventileinsatzes 10 ist in Richtung der Längsachse dieses Ventileinsatzes 10 veränderbar, wodurch die Kraft der Feder 16 auf den Stößel 12 sowie ein Arbeitshub des Magnetventils einstellbar sind.

In der dargestellten Grundstellung sind, etwa auf Höhe der Position des Kugelsegments 12.3 des Stößels 12, mehrere Querbohrungen 20 am Ventileinsatz 10 ausgebildet. Diese Querbohrungen 20 durchdringen die Wandung des Ventileinsatzes 10 und werden an dessen Außenumfang von einem ringförmigen Filterelement 22 übergedeckt. Die Querbohrungen 20 bilden gemeinsam einen Ablauf aus der Ventilpatrone 100. Zwischen ihnen und dem Stützring 18 der Feder 16 besteht ein axialer Abstand, wodurch sich die Feder 16 mitsamt dem Stützring 18 außerhalb einer sich bei geöffnetem Ventilsitz einstellenden Druckmittelströmung durch die Ventilpatrone 100 befindet und damit die Strömungsverhältnisse nicht beeinflusst.

Das Filterelement 22 stößt mit seiner ankerseitigen Stirnfläche 22.1 an einem Radialbund 24.1 einer druckmitteldicht am Ventileinsatz 10 verankerten Kapsel 24 an. Die Verankerung der Kapsel 24 am Ventileinsatz 10 erfolgt beispielhaft mittels einer Bördelverbindung 26. Zu deren Ausbildung weist der Ventiieinsatz 10 eine horizontal umlaufende Ringnut 26.1 auf, in die hinein durch einen Bördelarbeitsgang Material der Wandung der Kapsel 24 verdrängt wurde.

Die Kapsel 24 hat ein offenes, den Ventileinsatz 10 umschließendes Ende und ein kuppelartig gewölbtes, vom Ventileinsatz 10 abgewandt liegendes geschlossenes Ende. Vom Ventileinsatz 10 und der Kapsel 24 wird ein hohler Ankerraum 28 begrenzt, in dem ein Magnetanker 30 beweglich aufgenommen ist. Dieser Magnetanker 30 liegt an dem aus dem Ventileinsatz 10 vorstehenden Stirnende des Stößels 12 an und besorgt dessen Betätigung.

Ein Zulauf 32 der Ventilpatrone 100 befindet sich an dem vom Anker 30 abgewandt liegenden Ende der Ventilpatrone 100. Dieser Zulauf 32 ist an einem Sockelteil 34 ausgebildet, das vorzugsweise spritzgusstechnisch aus Kunststoffmaterial hergestellt ist. Das Sockelteil 34 hält das Filterelement 22 auf Anlage am Radialbund 24.1 der Kapsel 24 und weist einen zentrisch angeordneten, vorspringenden und vom Zulauf 32 durchdrungen Dom 34.1 auf. Mit diesem Dom 34.1 ragt das Sockelteil 34 in das ankerabgewandt liegende offene Ende des Ventilkörpers 14 hinein und presst dabei dessen Wandung druckmitteldicht gegen den Innendurchmesser dieses Ventilkörpers 14. Der Dom 34.1 steht dabei so weit vor, dass der Zulauf 32 in Strömungsrichtung nahezu unmittelbar vor Ventilsitz 14.1. ausmündet

Seitlich zum Zulauf ist im Sockelteil 34 weiterhin ein Rückschlagventil 36 vorhanden. Dieses Rückschlagventil 36 steuert einen Druckmittelkanal 38 der von dem durch die Querbohrungen 20 gebildeten Ablauf zum Zulauf 32 führt und im Sockelteil 34 selbst ausgebildet ist. Hierfür weist das Rückschlagventil 36 als Ventilglied eine Kugel 36.1 auf, die mit einem Kugelsitz 36.2 zusammenwirkt. Kugelsitz 36.2 und Kugel 36.1 sind relativ zueinander derart platziert, dass der Druckmittelkanal 38 nur freigegeben wird, falls der Druck im Ablauf größer ist als der im Zulauf 32 der Ventilpatrone 100 vorherrschende Druck.

Druckmittel das bei vom Ventilsitz 14.1 abgehobenem Stößel 12 durch den Zulauf 32 in das Innere des Ventileinsatzes 10 einströmt kann über durchgehende Axialnuten 18.1 am Stützring und durch Axialnuten 12.5 am Stößel 12 in den Ankerraum 28 gelangen und den dort angeordneten Anker 30 umströmen. Damit ist die Ventilpatrone 100 unter Betriebsbedingungen vollständig mit Druckmittel gefüllt. Die Axialnuten 12.5 und 18.1 bilden eine erste hydraulisch wirksame Druckmittelverbindung zwischen dem Ankerraum 28 und dem von den Querbohrungen 20 gebildeten Ablauf der Ventilpatrone 100 aus. Erfindungsgemäß ist wenigstens eine zweite hydraulisch wirksame Druckmittelverbindung vorhanden, welche den Ankerraum 28 mit dem Ablauf (Querbohrungen 20) verbindet. Diese wenigstens eine zweite hydraulisch wirksame Druckmittelverbindung ist abgekoppelt von der ersten hydraulischen Verbindung abseits der Führung des Stößels 12 angeordnet und zwar zwischen dem Außenumfang des Ventileinsatzes 10 und dem Innenumfang der Kapsel 24. Sie ist vorzugsweise ausgebildet anhand einer in Längsachsenrichtung des Ventileinsatzes 10 verlaufenden und sich von der ankerseitigen Stirnseite dieses Ventileinsatzes 10 bis etwa auf Höhe der Querbohrungen 20 erstreckenden radial offenen Längsnut 40. Diese Längsnut 40 kann an der Innenseite der Kapsel 24, an der Außenseite des Ventileinsatzes 10 oder an beiden Bauteilen gemeinsam ausgebildet sein. Die Längsnut 40 wird über weite Bereiche von der Kapsel 24 überdeckt und ist dadurch gegenüber der Umgebung der Ventilpatrone 100 abgedichtet. Ihr Querschnitt kann kreissegmentförmig, rechteckig, dreieckförmig oder mehreckig ausgeführt werden. Die Tiefe der Längsnut 40 ist größer als die Tiefe der die Bördelverbindung 26 ausbildenden Ringnut 26.1 am Ventileinsatz 10 und stellt damit trotz dieser bestehenden Bördelverbindung 26 einen hydraulisch wirksamen Durchgang zwischen Ankerraum 28 und Ablauf (Querbohrungen 20) her. Die Querschnittsfläche der Längsnut 40 kann ventil- oder funktionsabhängig dimensioniert werden. Um die magnetischen Eigenschaften des Magnetventils so wenig wie möglich zu beeinträchtigen, wird vorgeschlagen, diese Querschnittsfläche so klein wie erforderlich auszuführen. Sie sollte zur Erfüllung ihrer hydraulischen Wirksamkeit eine Mindestgröße, welche beim Ausführungsbeispiel etwa 0,2 mm² beträgt, jedoch nicht unterschreiten. Die Längsnut 40 verbindet den Ankerraum 28 mit dem Ablauf direkt und unmittelbar, das heißt auf kürzest möglichem Weg und ohne andere druckmittelführende Bereiche innerhalb der Ventilpatrone 100 anzuschneiden oder zu durchqueren.

Die durch die Längsnut 40 gebildete zweite Druckmittelverbindung bewirkt zusammen mit der erläuterten ersten Druckmittelverbindung die Entstehung eines geschlossenen Druckmittelpfades vom Zulauf 32 durch den Ventilsitz 14.1 im Ventilkörper 14 über die Führung des Stößels 12 in den Ankerraum 28 und durch diesen Ankerraum 28 hindurch unmittelbar zurück zum Ablauf (Querbohrung 20) und ist damit hydraulisch wirksam. Dadurch wird eine Durchströmung des Ankerraums 28 geschaffen und ein Ausspülen von eventuell im Ankerraum vorhandenen Gasblasen gewährleistet.

## Patentansprüche

1. Magnetventil, insbesondere zur Steuerung des Bremsdrucks einer Radbremse einer schlupfregelbaren Hydraulikbremsanlage eines Kraftfahrzeugs, mit wenigstens einem Zulauf (32) und wenigstens einem Ablauf (20), einem Ventileinsatz (10) mit einem verschiebbar geführten Stößel (12), einem Ventilkörper (14) mit einem vom Stößel (12) steuerbaren Steuerquerschnitt (14.1), einer am Ventileinsatz (10) verankerten und einen Ankerraum (28) begrenzenden Kapsel (24), einen den Stößel (12) betätigenden und im Ankerraum (28) beweglich aufgenommenen Anker (30) und einer elektrisch ansteuerbaren Magnetspule zur Betätigung dieses Ankers (30), wobei zwischen dem Ankerraum (28) und dem Ablauf (20) eine erste hydraulisch wirksame Verbindung besteht, die am Ventileinsatz (10) im Führungsbereich des Stößels (12) ausgebildet ist, und wenigstens eine zweite, hydraulisch wirksame Verbindung des Ankerraums (28) mit dem Ablauf (20) vorgesehen ist, die abseits des Führungsbereichs des Stößels (12) ausgebildet ist, **dadurch gekennzeichnet, dass** die wenigstens eine zweite hydraulisch wirksame Verbindung zwischen dem Außenumfang des Ventileinsatzes (10) und dem Innenumfang der Kapsel (24) ausgebildet ist.

2. Magnetventil nach Anspruch 1, **dadurch gekennzeichnet, dass** die wenigstens eine zweite hydraulisch wirksame Verbindung wenigstens eine nach außen offene Längsnut (40) umfasst, die sich in Axialrichtung des Ventileinsatzes (10) erstreckt.

3. Magnetventil nach Anspruch 2, **dadurch gekennzeichnet, dass** die Längsnut (40) am Außenumfang des Ventileinsatzes (10) und/oder am Innenumfang der Kapsel (24) ausgebildet ist.

4. Magnetventil nach Anspruch 2 oder 3, **dadurch gekennzeichnet, dass** die Längsnut (40) sich von einer dem Anker (30) zugewandten Stirnseite des Ventileinsatzes (10) bis auf Höhe von wenigstens einer die Wandung des Ventileinsatzes (10) durchdringenden und den Ablauf des Magnetventils bildenden Querbohrung (20) erstreckt.

5. Magnetventil nach einem der Ansprüche 2 bis 4, **dadurch gekennzeichnet, dass** die Längsnut (40) einen kreissegmentförmigen, rechteck-, dreieck- oder mehreckförmigen Querschnitt aufweist.

6. Magnetventil nach einem der Ansprüche 2 bis 5, **dadurch gekennzeichnet, dass** die Längsnut (40) eine Nuttiefe aufweist, die größer ist als die Nuttiefe einer am Ventileinsatz (10) ausgebildeten Ringnut (26.1) einer druckdichten Bördelverbindung (26) zwischen der Kapsel (24) und diesem Ventileinsatz (10).

7. Magnetventil nach einem der Ansprüche 2 bis 6, **dadurch gekennzeichnet, dass** die Längsnut (40) eine direkte und unmittelbare Verbindung zwischen dem Ankerraum (28) und dem Ablauf (20) bildet.

8. Magnetventil nach einem der vorhergehenden Ansprüche, **dadurch gekennzeichnet, dass** das Magnetventil als stromlos offenes Stetigventil ausgebildet ist.

## Claims

1. Solenoid valve, in particular for controlling the brake pressure of a wheel brake of a controllable-slip hydraulic brake system of a motor vehicle, having at least one inlet (32) and at least one outlet (20), a valve insert (10) with a displaceably guided plunger (12), a valve body (14) with a control cross section (14.1) which can be controlled by the plunger (12), a capsule (24) which is anchored on the valve insert (10) and bounds an armature space (28), an armature (30) which activates the plunger (12) and is movably accommodated in the armature space (28) and an electrically actuable solenoid for activating this armature (30), wherein between the armature space (28) and the outlet (20) there is a first hydraulically active connection which is formed on the valve insert (10) in the guide region of the plunger (12), and at least a second hydraulically active connection of the armature space (28) to the outlet (20) is provided, which connection is formed on the other side of the guide region of the plunger (12), **characterized in that** the at least one second hydraulically active connection is formed between the outer circumference of the valve insert (10) and the inner circumference of the capsule (24).

2. Solenoid valve according to Claim 1, **characterized in that** the at least one second hydraulically active connection comprises at least one outwardly open longitudinal groove (40) which extends in the axial direction of the valve insert (10).

3. Solenoid valve according to Claim 2, **characterized in that** the longitudinal groove (40) is formed on the outer circumference of the valve insert (10) and/or on the inner circumference of the capsule (24).

4. Solenoid valve according to Claim 2 or 3, **characterized in that** the longitudinal groove (40) extends from an end side of the valve insert (10), facing the armature (30), to the level of at least one transverse drill hole (20) which penetrates the wall of the valve insert (10) and forms the outlet of the solenoid valve.

5. Solenoid valve according to one of Claims 2 to 4, **characterized in that** the longitudinal groove (40) has a circular-segment-shaped, rectangular, triangular or polygonal cross section.

6. Solenoid valve according to one of Claims 2 to 5, **characterized in that** the longitudinal groove (40) has a groove depth which is larger than the groove depth of an annular groove (26.1), formed on the valve insert (10), of a pressure-tight flare coupling (26) between the capsule (24) and this valve insert (10).

7. Solenoid valve according to one of Claims 2 to 6, **characterized in that** the longitudinal groove (40) forms a direct and immediate connection between the armature space (28) and the outlet (20).

8. Solenoid valve according to one of the preceding claims, **characterized in that** the solenoid valve is embodied as a continuously adjustable valve which is open in the currentless state.

## Revendications

1. Electrovanne, notamment pour la commande de la pression de freinage d'un frein de roue d'une installation de freinage hydraulique à commande d'antipatinage d'un véhicule automobile, comprenant au moins une entrée (32) et au moins une sortie (20), un insert de soupape (10) avec un poussoir (12) guidé de manière déplaçable, un corps de soupape (14) avec une section transversale de commande (14.1) pouvant être commandée par le poussoir (12), une capsule (24) fixée à l'insert de soupape (10) et limitant un espace d'induit (28), un induit (30) actionnant le poussoir (12) et reçu de manière mobile dans l'espace d'induit (28), et une bobine magnétique pouvant être commandée électriquement pour l'actionnement de cet induit (30), une première liaison à action hydraulique existant entre l'espace d'induit (28) et la sortie (20), laquelle liaison est réalisée sur l'insert de soupape (10) dans la région de guidage du poussoir (12), et au moins une deuxième liaison à action hydraulique de l'espace d'induit (28) à la sortie (20) étant prévue, laquelle est réalisée à l'écart de la région de guidage du poussoir (12), **caractérisée en ce que** l'au moins une deuxième liaison à action hydraulique est réalisée entre la périphérie extérieure de l'insert de soupape (10) et la périphérie intérieure de la capsule (24).

2. Electrovanne selon la revendication 1, **caractérisée en ce que** l'au moins une deuxième liaison à action hydraulique comprend au moins une rainure longitudinale (40) ouverte vers l'extérieur, qui s'étend dans la direction axiale de l'insert de soupape (10).

3. Electrovanne selon la revendication 2, **caractérisée en ce que** la rainure longitudinale (40) est réalisée sur la périphérie extérieure de l'insert de soupape (10) et/ou sur la périphérie intérieure de la capsule (24).

4. Electrovanne selon la revendication 2 ou 3, **caractérisée en ce que** la rainure longitudinale (40) s'étend depuis un côté frontal de l'insert de soupape (10) tourné vers l'induit (30) jusqu'à la hauteur d'au moins un alésage transversal (20) traversant la paroi de l'insert de soupape (10) et constituant la sortie de l'électrovanne.

5. Electrovanne selon l'une quelconque des revendications 2 à 4, **caractérisée en ce que** la rainure longitudinale (40) présente une section transversale en forme de segment de cercle, de forme rectangulaire, triangulaire, ou polygonale.

6. Electrovanne selon l'une quelconque des revendications 2 à 5, **caractérisée en ce que** la rainure longitudinale (40) présente une profondeur de rainure qui est supérieure à la profondeur de rainure d'une rainure annulaire (26.1) réalisée sur l'insert de soupape (10) d'une liaison sertie étanche à la pression (26) entre la capsule (24) et cet insert de soupape (10).

7. Electrovanne selon l'une quelconque des revendications 2 à 6, **caractérisée en ce que** la rainure longitudinale (40) forme une liaison directe et immédiate entre l'espace d'induit (28) et la sortie (20).

8. Electrovanne selon l'une quelconque des revendications précédentes, **caractérisée en ce que** l'électrovanne est réalisée sous forme de servovalve proportionnelle ouverte sans courant.
